Europäisches Patentamt

European Patent Office

Office européen des brevets

(11) Publication number: **0 180 314**
**A2**

# EUROPEAN PATENT APPLICATION

(21) Application number: 85306721.3

(22) Date of filing: 20.09.85

(51) Int. Cl.⁴: **B62B 9/26**

(30) Priority: 21.09.84 GB 8423999

(43) Date of publication of application:
07.05.86 Bulletin 86/19

(84) Designated Contracting States:
AT BE CH DE FR GB IT LI LU NL SE

(71) Applicant: **Gotto, Cynthia Elizabeth**
**29 Hilary Avenue**
**Norwich NR1 4LF Norfolk(GB)**

(72) Inventor: **Gotto, Cynthia Elizabeth**
**29 Hilary Avenue**
**Norwich NR1 4LF Norfolk(GB)**

(74) Representative: **Gillam, Francis Cyril et al**
**Sanderson & Co. 97 High Street**
**Colchester Essex C01 1TH(GB)**

(54) **Push-chair bag assembly.**

㊼ A bag assembly for use with a push-chair comprises a pair of bags (10 and 11) with an adjustable strap (22) extending between a pair of rings (21) each connected to the top of an adjacent bag by means of a further adjustable strap (19). Each bag (10 and 11) is of generally triangular shape with an opening adjacent its top, and has a clip (24) adapted for connection to a frame member of a push-chair. In use, the rings (21) are passed over the handles (23) of the push-chair, and adjustment of the straps (19 and 22) enables the bags to be hung in the correct position relative to the side frames. Alternatively, the bags may be slung over a user's shoulder, with strap (22) bearing on the shoulder and one bag in front of the user and the other bag behind.

FIG 2

EP 0 180 314 A2

## PUSH-CHAIR BAG ASSEMBLY

This invention relates to a bag assembly, adapted for use with push-chairs for babies and young children.

So-called push-chairs are very commonly used by parents for transporting their off-spring from place to place, in view of the many advantages possessed by such chairs, as compared to carriage-type perambulators. For example, such push-chairs are relatively light in weight, are easily manoeuvrable and can be collapsed to permit their transport on an omnibus or in a private vehicle, and to permit their storage in a house.

Push-chairs as described mostly have two side frame assemblies each of a generally triangular shape, each side frame supporting a front wheel and a rear wheel (or pairs of wheels), with a handle projecting upwardly from the top of the triangular side frame. The two side frames are connected together by cross-linkages designed to permit the two frames to be moved together to collapse the push-chair, and to brace the two frames in a spaced-apart disposition when the push chair is unfolded. In some designs, the two described handles are interconnected by a handle cross-bar extending between the upper ends of the handles. Such push-chairs will hereinafter be referred to as "of the kind described".

A parent often takes her child on a shopping expedition, and if that child is of a young age, the parent may also take a push-chair of the kind described. Due to the design of such push-chairs, and especially when a child is being carried in the chair, it is very difficult to push the chair with only one hand, grasping the handle cross-bar or one of the separate handles projecting from the two side frames. As both hands must really be used to push the chair, the parent can then only with considerable inconvenience carry at the same time a shopping bag.

The usual solution to the above problem is that the parent passes the hand-holds of a shopping bag or carrier bag over the tube or other member defining the handle or one of the handles of the push-chair, so freeing both hands for pushing. That however is far from satisfactory, for the bag hangs down and may at least partially obstruct the parent's legs when walking, but far more importantly the bag - when carrying various articles - may completely upset the stability of the push-chair. Almost invariably, the balance becomes such that the chair topples over backwards about the rear wheels should the child leave the chair seat, if any appreciable weight is placed in a bag carried on the handle or on either of the handles of the push-chair.

Another solution often adopted is for the parent to make the child walk and to place the shopping in the seat itself - but that of course defeats the object in taking the push-chair in the first place.

It is an aim of this invention to provide means whereby a push-chair user may safely and easily carry shopping or other articles on the push-chair without adversely affecting the stability thereof.

Accordingly, a bag assembly for a push-chair of the kind described is characterised by the provision of a pair of bags each of a generally triangular configuration and adapted to lie next to one of the side frames respectively of the push-chair, clip means disposed on each bag at or adjacent the lower end thereof and arranged for releasable connection to members of the push-chair side frames, a tie extending between the top portions of the two bags, and location means associated with the tie and disposed at or adjacent the top portion of each bag, each of which location means is arranged for connection with the handle member of the push-chair.

In the case of a push-chair having two distinct handles projecting upwardly one from each side frame, the rings may be passed one over each handle respectively so that the bag assembly is suspended from the handles. In the case of a push-chair having an upper cross-member extending between the handle parts projecting from the side frames, such that the handle is in effect in the form of a closed loop, the rings may be hung from the cross-member by means of a pair of hooks each adapted for mounting on the cross-member and having a hook portion from which a ring may be suspended. Instead, the hooks may suitably be affixed to the upwardly-directed parts of the handles.

It will be appreciated that when constructing an embodiment of bag assembly of this invention, the assembly should specifically be adapted to a particular design of push-chair, ensuring for example that the bags have a side-elevational shape corresponding to that of the push-chair side frames, that the clips may adequately connect with the frame members, and that the tie is of the correct length having regard to the width of the push-chair. However, in view of the similarity between different models of push-chairs of the kind described from any one manufacturer, and even between those of different manufacturers, it is likely that a bag assembly specifically constructed to suit the parameters of one particular push-chair will in fact be perfectly satisfactory with many other push-chairs, especially if the effective length of the tie is made adjustable. Thus, a very large sector of the push-chair market could be covered by relatively few distinct embodiments of bag assemblies of this invention.

Despite the foregoing, it may be advantageous for commercial and aesthetic reasons to manufacture the bags themselves from fabrics and patterns which match those of the seat of the push-chair for which the bag assembly is intended to be used, without changing the actual dimensions of the bag assembly from those intended for some other push-chair.

Each bag of the assembly could be fabricated in various ways, to have an appropriate profile matching that of the side frame of a push-chair. Thus, though each bag should have an essentially triangular shape, as considered from the side, the edges of the bag need not be strictly linear, nor need the various panels making up the bag be strictly planar. It is nevertheless convenient for the base of the bag to be provided with a rigid or stiffened base panel, intended when the bag is in use to extend in a substantially horizontal plane. Typically, the angle between such a base panel and the rear edge of each bag should be at least 90° or an obtuse angle, and the angle between the base and front edge of the bag to be an acute angle, whereby the front edge of the bag may lie generally along the length of the main front supporting member of a push-chair side-frame assembly.

Preferably, each bag has two side panels, each of a generally triangular shape as discussed above, with end panels and a base panel lying between the two side panels. The width of such end panels may taper upwardly, whereby each bag narrows towards its top, where it is joined to the tie which extends between the two bags. Though the outer side panel could have a slit defining an opening through which the bag may be loaded and unloaded, it is preferred for the opening to be defined by arranging the outer side panel to be shorter than the inner side panel with an optional flap connected at least to the inner side panel and able to lie over the opening. Such a flap and the outer side panel may have co-operable fastener means, such as press-studs or a zip-fastener.

Conveniently, the tie is made adjustable to alter its effective length, for instance by means of a buckle arrangement. The location means preferably comprises a pair of rings each connected between a bag and an end of the tie. A strap or other tie of adjustable length may be disposed between each ring and the associated bag, to permit the bag assembly to be adjusted to suit the widest possible range of push-chairs. Each ring should be of a rigid material, and have an inner diameter sufficiently great to pass over one of the handles, whereas each tie may be made of any convenient flexible material, such as a fabric or webbing strap.

The clip means may take a variety of forms, but should readily be engageable with and releasable from a frame member of the push-chair. For example, each clip means may comprise a metal or plastic spring clip having a pair of arms together defining a re-entrant opening, the mouth of the opening being smaller than the tube size around which the clip is to be fitted. For certain embodiments such a clip is preferably fastened to a piece of stiffening material provided within the bag, for instance by means of a rigid bracket.

Though the bag assembly of this invention is specially adapted for use with a push-chair, as has been described above, it will be appreciated that the bag assembly may be used for carrying articles simply by a user slinging the tie over his/her shoulder - and so without a push-chair of the kind described. This greatly enhances the utility of the bag assembly of this invention and is a most considerable convenience for a person with young children who may not always wish to take a push-chair on shopping expeditions.

By way of example only, one specific embodiment of this invention will now be described in detail, reference being made to the accompanying drawings, in which:-

Figure 1 is a general perspective view of a bag assembly constructed in accordance with this invention;

Figure 2 is a perspective view of a push-chair of the kind described and having the bag assembly of Figure 1 fitted thereto; and

Figure 3 is a sketch of a person using the bag assembly of this invention, as shoulder bags.

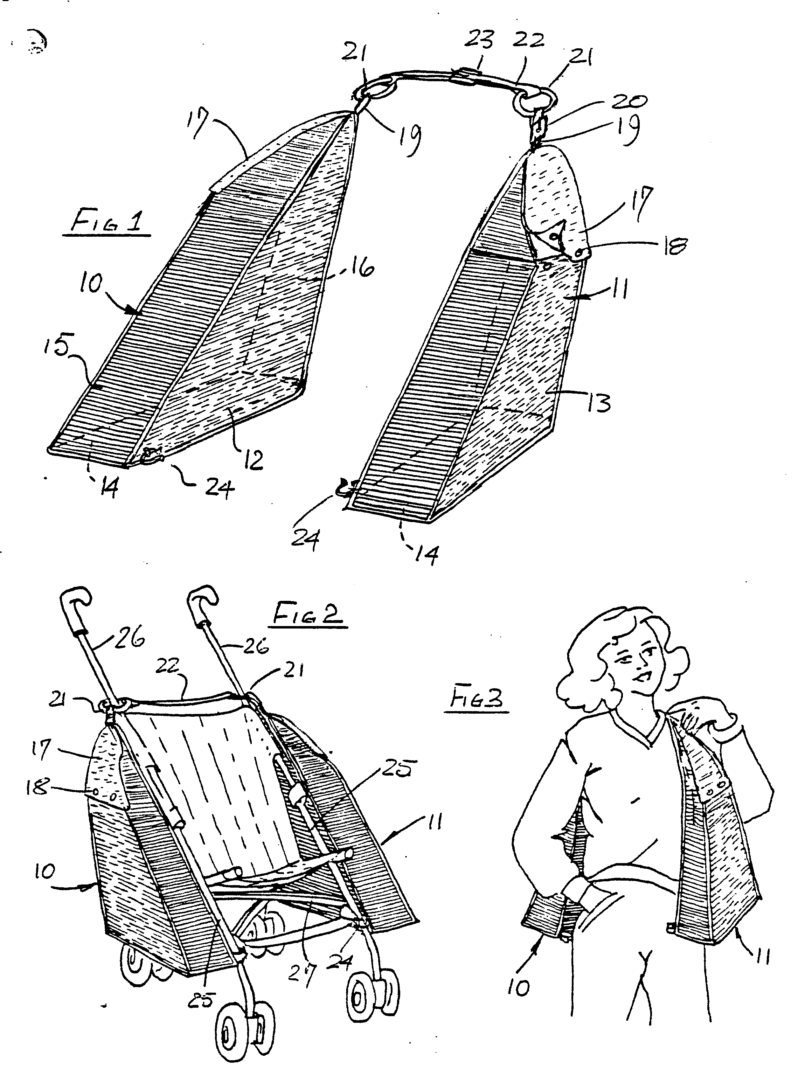

Referring initially to Figure 1, it can be seen that the bag assembly of this invention comprises two separate bags 10 and 11, each of a generally triangular shape when viewed from the side. Each bag comprises an inner side panel 12, an outer side panel 13, a base panel 14, a front panel 15, and a rear panel 16. Each panel is preferably made of a flexible water-proofed material having an appropriate pattern or design thereon, the panels being stitched or welded together by methods known in the art - for example including piping or similar strengthening arrangements for the seams between the panels. Though not shown in the drawings, the base panel 14 may be stiffened or include a rigid plate therewithin. Also, at least some of the panels may be cut together from a single piece of material, so obviating the need for seams between those panels.

Each side panel should have an overall shape adapted to conform to the side-frame assembly of a push-chair of the kind described and with which the bag assembly is to be used. Typically therefore the angle between the base panel 14 and the front panel 15 is an acute angle, whereas the angle between the base panel 14 and the rear panel 16 is an obtuse angle. The lower portion of the front panel 15 and of the rear panel 16 should be of a generally constant width, whereas the upper portion of these two panels should taper upwardly. At the top of the bag, a flap 17 is attached to the inner side panel 12 and also at least partially to the front and rear panels 15 and 16, the flap 17 and the outer side panel 13 being provided with appropriate co-operable fasteners (such as press-studs 18 or a zip-fastener).

A strap 19 is stitched to the top of each bag, a buckle 20 permitting adjustment of the strap and that strap passing through a ring 21. A further strap 22 passes through both rings 21, this strap also having a buckle fastening 23 to permit adjustment of its effective length. Suitable adjustment of the straps 19 and 22 permit the two bags 10 and 11 to lie closely adjacent the two side-frames of the push-chair of the kind described with which the bag assembly is to be used.

At the forward end of the base panel 14 of each bag 10 and 11 there is provided a spring clip 24 having a pair of spring arms facing rearwardly and shaped to define a re-entrant recess. Each clip is advantageously supported by such stiffening as may be provided for the base panel 14 and has dimensions selected such that a side-frame member of the push-chair with which the bag assembly is to be used may securely be received between the arms of the clip.

Figure 2 illustrates how the bag assembly of Figure 1 is used with the push-chair of the kind described. Such a push-chair includes two side frames, shown in part at 25, there being a pair of handles 26 projecting one from each of the two side frames respectively. At the front and rear of each side-frame, there are two pairs of wheels, the front pair of which is designed to castor in a manner known in the art. Folding cross-braces 27 are provided for the push-chair, whereby the two side-frames 25 may be held in the spaced-apart disposition illustrated in Figure 2, or may be moved closer together to collapse the push-chair.

The bag assembly illustrated in Figure 1 is fitted to the push-chair by dropping the two rings 21 over the two handles 26 of the push-chair, when the chair is in the unfolded state illustrated in Figure 2. Then, the clips 24 are snapped on to the adjacent frame members, so as securely to hold the bag in the illustrated position. Either bag may then be loaded with articles, without the stability of the push-chair being adversely affected. Also of course a person pushing the chair will still have both hands free, to push and guide the chair.

In the case of a push-chair of the kind described but having a handle which extends continuously in a loop from one side frame to the other, two hook-like clips (not shown) may be provided for connection either to the part of the handle extending laterally or to the two upwardly-extending parts of the handle, the rings being hooked on to those clips so that the bag assembly is suspended thereby from the handle.

As illustrated in Figure 3, the bag assembly can most conveniently be used without being fitted to a push-chair. The bag assembly may be slung over the shoulder of a user with the strap 22 bearing on the shoulder, and when used in this way the bag provides a most convenient means for carrying a considerable quantity of articles, again leaving the hands of a user free.

## Claims

1. A bag assembly for a push-chair of the kind described, characterised by the provision of a pair of bags (10 and 11) each of a generally triangular configuration and adapted to lie next to one of the side frames (25) respectively of the push-chair, clip means (24) disposed on each bag at or adjacent the lower end therefor and arranged for releasable connection to members of the push-chair side frames (25), a tie (22) extending between the top portions of the two bags, and location means (21) associated with the tie (22) and disposed at or adjacent the top portion of each bag, each of which location means (21) is arranged for connection with the handle member of the push-chair.

2. A bag assembly according to claim 1, further characterised in that the base of each bag (10 and 11) is provided with a rigid or stiffened base panel, each clip means (24) preferably being supported by said base panel.

3. A bag assembly according to claim 1 or claim 2, characterised in that each bag (10 and 11) has two side panels (12 and 13) each of a generally triangular shape, with end panels (15 and 16) and a base panel (14) lying between the two side panels.

4. A bag assembly according to claim 3, further characterised in that the outer side panel (13) is shorter than the inner side panel (12) to define an opening through which the bag may be loaded and unloaded, there being an optional flap (17) connected at least to the inner side panel (12) and able to lie over the opening.

5. A bag assembly according to claim 4, further characterised in that the flap (17) and the outer side panel (13) have co-operable fastener means (18).

6. A bag assembly according any of the preceding claims, characterised in that said tie (22) is made adjustable to permit alteration of its effective length, preferably by means of a buckle arrangement (23).

7. A bag assembly according to any of the preceding claims, characterised in that the location means comprises a pair of rings (21) each connected between a respective bag (10 or 11) and an end of the tie (22).

8. A bag assembly according to claim 6, further characterised in that a strap (19) of adjustable length is disposed between each ring (21) and the associated bag (10 or 11), to permit the bag assembly to be adjusted to suit any given push-chair.

9. A bag assembly according to any of the preceding claims, characterised in that the clip means (24) comprises a metal or plastic spring clip having a pair of arms together defining a re-entrant opening, the mouth of the opening being smaller than the tube size around which the clip is to be fitted.

Fig 1

Fig 2

Fig 3